# EUROPÄISCHE PATENTSCHRIFT

(11) **EP 4 154 698 B1**
(45) Veröffentlichungstag und Bekanntmachung des Hinweises auf die Patenterteilung: **19.02.2025**
(21) Anmeldenummer: 22184000.2
(22) Anmeldetag: 11.07.2022
(51) Int. Cl.: A01D 41/127, G01S 7/48, G01S 17/10, G01S 17/42, G01S 17/88

(54) **VERFAHREN ZUR DETEKTION DES BODENNIVEAUS AUF EINER VON EINER LANDWIRTSCHAFTLICHEN ARBEITSMASCHINE ZU BEARBEITENDEN FLÄCHE**
METHOD FOR DETECTING GROUND LEVEL ON AN AREA TO BE PROCESSED BY AN AGRICULTURAL WORKING MACHINE
PROCÉDÉ DE DÉTECTION DU NIVEAU DU SOL SUR UNE SURFACE À TRAITER PAR UNE MACHINE DE TRAVAIL AGRICOLE

(30) Priorität: 22.09.2021 DE 102021124481
(43) Veröffentlichungstag der Anmeldung: 29.03.2023
(73) Patentinhaber: CLAAS E-Systems GmbH, 49201 Dissen (DE)
(72) Erfinder: Redenius, Jannik, 32361 Pr. Oldendorf (DE)
(74) Vertreter: CLAAS 365FarmNet GmbH

(56) Entgegenhaltungen:
- EP-A1- 3 530 098
- EP-A1- 3 530 099
- DE-A1- 102008 043 716
- DE-A1- 102011 017 621
- DE-A1- 102011 085 380

## Beschreibung

Die vorliegende Erfindung betrifft ein Verfahren zur Detektion des Bodenniveaus auf einer von einer landwirtschaftlichen Arbeitsmaschine zu bearbeitenden Fläche gemäß dem Oberbegriff des Anspruches 1. Weiterhin betrifft die vorliegende Erfindung eine landwirtschaftliche Arbeitsmaschine zur Durchführung eines solchen Verfahrens gemäß dem Anspruch 13.

Verfahren und Systeme zur Detektion des Bodenniveaus und/oder der Bestandshöhen von Pflanzen sind aus den Druckschriften DE 10 2011 017621 A1, DE 10 2011 085380 A1, EP 3 530 099 A1 und EP 3 530 098 A1 bekannt.

Die Bestimmung einer Bestandhöhe eines Feldbestands mittels einer an einer landwirtschaftlichen Arbeitsmaschine angeordneten optischen Sensoranordnung, die mittels Laufzeitverfahren (Time of Flight) Distanzen bestimmt, erfolgt anhand einer auf die Anbauposition der Sensoranordnung bezogene statische Transformation. In der Regel ist die Sensoranordnung hierzu am höchsten Punkt der Arbeitsmaschine, dem Kabinendach angeordnet. Ausgehend von diesem Punkt der Sensoranordnung, von welchem elektromagnetische Sendestrahlen ausgesandt und reflektierte Sendestrahlen empfangen werden, wird die Bestandshöhe bestimmt. Diese Art der Bestimmung der Bestandhöhe ist bedingt durch den fehlenden Einbezug der Bodenkontur im durch die Sensoranordnung betrachteten Bereich fehlerbehaftet. Eine von einer gleichmäßigen ebenen Bodenkontur abweichende wellige Bodenstruktur führt zu unterschiedlichen Bestandshöhen. Bei einem Vorhandensein einer Schnittkante oder einer Fahrgasse kann diesen Effekt durch eine Bodenniveaudetektion neben dem Feldbestand, d.h. im Bereich der Schnittkante oder der Fahrgasse, geringfügig kompensiert aber nicht nahezu vollständig ausgeglichen werden.

Der Erfindung liegt somit die Aufgabe zugrunde, ein Verfahren der eingangs genannten Art weiterzubilden, durch das die Detektion des Bodenniveaus verbessert und somit die Bestandshöhenbestimmung präziser wird.

Die vorstehende Aufgabe wird bei einem Verfahren gemäß dem Oberbegriff des Anspruches 1 durch die Merkmale des kennzeichnenden Teils des Anspruches 1 gelöst. Weiterhin wird diese Aufgabe aus vorrichtungstechnischer Sicht ausgehend vom Oberbegriff des Anspruchs 13 in Verbindung mit dessen kennzeichnenden Merkmalen gelöst. Die hierauf jeweils folgenden, abhängigen Ansprüche geben vorteilhafte Weiterbildungen der Erfindung wieder.

Gemäß dem Anspruch 1 wird ein Verfahren zur Detektion des Bodenniveaus auf einer von einer landwirtschaftlichen Arbeitsmaschine zu bearbeitenden Fläche vorgeschlagen, wobei die Arbeitsmaschine eine Sensoranordnung umfasst, durch die periodisch Sendepulse aus elektromagnetischen Sendestrahlen in mindestens einer Senderichtung auf die zu bearbeitende Fläche ausgesendet werden, wobei die Sendepulse von einem Feldbestand und Boden als Reflektionsflächen reflektiert und als Echopulse von der Sensoranordnung empfangen und an eine Steuerungseinheit der Arbeitsmaschine zur Auswertung übertragen werden, wobei für zumindest einen Teil der von der als Laserscanner ausgeführten Sensoranordnung ausgesendeten Sendepulse unterschiedliche Teilstrahlen ein und desselben Sendestrahls von in der jeweiligen Senderichtung befindlichen Reflektionsflächen zueinander zeitversetzt reflektiert werden, so dass sich der jeweils resultierende Echopuls aus entsprechend zeitversetzten Teil-Echopulsen zusammensetzt. Erfindungsgemäß ist vorgesehen, dass mittels der Steuerungseinheit basierend auf einer Pulsweite innerhalb des resultierenden Echopulses und/oder einer Pulsform des resultierenden Echopulses sowie einer laufzeitbasierten Distanzbestimmung eines Distanzwertes zur jeweiligen Reflektionsfläche das Bodenniveau und/oder eine Bestandshöhe des Feldbestands ermittelt wird.

Wesentlich ist die grundsätzliche Überlegung, dass durch das Verarbeiten und Auswerten der zeitlichen Signalform der Echopulse, die von der als Laserscanner ausgeführten Sensoranordnung bereitgestellt werden, zwischen dem Feldbestand und dem Boden als Reflexionsflächen unterschieden wird. Dabei wird das Bodenniveau des Bodens als Reflexionsfläche auf dem sich der abzuerntende Feldbestand befindet detektiert. Die Detektion des Bodenniveaus, auf dem sich der abzuerntende Feldbestand befindet, ermöglicht eine präzisere Bestimmung der tatsächlichen Bestandshöhe. Durch das erfindungsgemäße Verfahren wird das jeweilige Bodenniveau ermittelt, welches an der Stelle auftritt, an welcher sich auch der Feldbestand befindet, dessen Bestandshöhe bestimmt wird.

Das Heranziehen von zum abzuerntenden Feldbestand benachbarter Bereiche, wie einer Schnittkante oder einer Fahrgasse, können das tatsächliche Bodenniveau nicht wiedergeben. Insbesondere aufgrund großer Arbeitsbreiten von an der landwirtschaftlichen Arbeitsmaschine angeordneten Vorsatzgeräten werden etwaige Änderungen in der Bodenkontur gegenüber einer zuvor abgeernteten benachbarten Fahrspur nicht erfasst. Das erfindungsgemäße Verfahren vermeidet diesen Nachteil, indem vorausschauend das Bodenniveau ermittelt wird.

Insbesondere kann durch das Verarbeiten und Auswerten der zeitlichen Signalform der Echopulse, die von der als Laserscanner ausgeführten Sensoranordnung bereitgestellt werden, zwischen Pflanzen unterschiedlicher Fruchtarten unterschieden werden. In Abhängigkeit von der angebauten Fruchtart auf einer zu bearbeitenden Fläche unterscheidet sich die jeweilige Bestandshöhe signifikant. Das Verfahren sollte in Abhängigkeit von der Fruchtartbestimmung durchgeführt werden. Bei einem Feldbestand der Fruchtart Mais ist die Distanz zwischen der Kammlinie des Feldbestands und dem Boden größer als beispielsweise bei Feldbeständen der Fruchtarten Raps oder Weizen.

Hierzu kann eine Unterscheidung zwischen verschiedenen Fruchtarten des bestehenden Feldbestands anhand eines Streuungsmaßes der Reflexionshöhe und/ oder der Signatur der Pulsform durch einen Vergleich mit Referenzkurven durchgeführt werden. Bevorzugt können die Referenzkurven in einer Speichereinheit der Steuerungseinheit abrufbar hinterlegt sein. Denkbar ist aber auch, dass die Referenzkurven von einer externen Datenquelle abgerufen werden.

Dabei kann als Streuungsmaß eine Varianz, eine Standardabweichung oder ein Quantil, insbesondere ein 10%-Quantil, verwendet werden, um zwischen Fruchtarten im Umfeld der Arbeitsmaschine unterschieden zu können.

Insbesondere kann die Unterscheidung zwischen verschiedenen Fruchtarten anhand der Pulsweite bezogen auf einen vorgegebenen Schwellwert für eine Akkumulation von Messwerten in einem räumlich begrenzten Segment innerhalb des Feldbestands durchgeführt werden.

Bevorzugt kann anhand einer ersten ansteigenden Flanke des jeweiligen resultierenden Echopulses das Auftreffen auf den Feldbestand und anhand einer letzten fallenden Flanke des resultierenden Echopulses das Auftreffen auf den Boden bestimmt werden.

Hierzu können anhand eines Zeitversatzes zwischen der ersten ansteigenden Flanke und der letzten fallenden Flanke des jeweiligen resultierenden Echopulses für eine Akkumulation von Messwerten in einem Segment innerhalb des Feldbestands die Bestandshöhe und die Lage des Bodenniveaus bestimmt werden.

Insbesondere kann basierend auf der Detektion zumindest des Bodenniveaus zumindest eine Handlungsanweisung durch die Steuerungseinheit generiert werden, um den Betrieb der Arbeitsmaschine zu beeinflussen. Weiterhin kann die, insbesondere optional, detektierte Bestandshöhe herangezogen werden, um eine Handlungsanweisung durch die Steuerungseinheit zu generieren, welche den Betrieb der Arbeitsmaschine beeinflusst. Beispielsweise kann die Detektion zur vorausschauenden Höhenregelung eines an der Arbeitsmaschine angeordneten Vorsatzgerätes verwendet werden. Insbesondere kann die Detektion des Bodenniveaus zur Schnitthöhenregelung eines Schneidwerks als Vorsatzgerät der Arbeitsmaschine dienen. Die Detektion des Bodenniveaus kann zudem zur Einstellung bzw. Anpassung einer Fahrgeschwindigkeit der Arbeitsmaschine verwendet werden.

Weiterhin kann als zumindest eine Handlungsanweisung eine Vorgabe und/oder eine Auswahl von initialen Betriebsparametern für zumindest ein Arbeitsaggregat der landwirtschaftlichen Arbeitsmaschine durchgeführt werden. Insbesondere kann das zumindest eine Arbeitsaggregat ein Vorsatzgerät oder ein Anbaugerät einer als selbstfahrende Erntemaschine oder als Traktor ausgeführten Arbeitsmaschine sein.

Bevorzugt können die Reflexionsintensität des jeweiligen resultierenden Echopulses, die Wellenlänge und/oder Umgebungslichtverhältnisse durch den Laserscanner bestimmt werden. Hierzu kann der Laserscanner dazu eingerichtet sein, Signale bereitzustellen, durch die neben der Pulsweite und/oder der Pulsform, d.h. der zeitlichen Signalform der Echopulse, eine Auswertung der Reflexionsintensität, bestehender Umgebungslichtverhältnisse und/oder der Wellenlänge der reflektierten Sendepulse ermöglicht wird. Mittels der Reflexionsintensität kann die Oberflächenfarbe und/oder die Oberflächenrauheit der Reflexionsflächen bestimmt werden. Die Auswertung der Wellenlänge kann ebenfalls zur Bestimmung der Oberflächenfarbe und/oder der Oberflächenrauheit der Reflexionsflächen herangezogen werden. Darüber hinaus kann anhand der Wellenlänge der reflektierten Sendepulse auf die Zusammensetzung der Reflexionsflächen geschlossen werden. Hierdurch lässt sich die Bestimmung der Art und Lage der Reflexionsflächen weiter verbessern bzw. verfeinern.

Gemäß einer Weiterbildung kann zumindest eine zusätzliche, von einem Laserscanner abweichende, optische Sensoranordnung zur Klassifikation der Fruchtart und/oder eines Fremdbewuchses verwendet werden. Eine Einbeziehung einer zusätzlichen optischen Sensoranordnung, die nicht als Laserscanner ausgeführt ist, kann zu einer Verbesserung des Analysevorgangs bei der Klassifikation der Fruchtart beitragen. Beispielsweise kann eine Kamera als optische Sensoranordnung vorgesehen sein, welche Bilder im sichtbaren Spektralbereich generiert. Alternativ kann eine Kamera als optische Sensoranordnung vorgesehen sein, welche Bilder im Nahinfrarotbereich generiert. Durch das Einbeziehen von RGB-Kamerabildern oder Infrarotkamerabildern sowie zusätzlicher spezifischer Merkmale des Pflanzenbestandes und/oder des Fremdbewuchses, wie Form, Farbe, Struktur und dergleichen, kann das Ergebnis der Klassifikation verbessert werden.

Bevorzugt können zur Analyse des jeweiligen resultierenden Echopulses statistische oder adaptive Schwellwertverfahren oder nicht-analytische Verfahren verwendet werden. Lediglich beispielhaft seien hierfür das gaußsche Eliminationsverfahren, Support Vector Machine oder künstliche neuronale Netzwerke genannt, mittels der eine Klassifizierung durchgeführt werden kann.

Nach einer Lehre gemäß dem Anspruch 13, welcher eigenständige Bedeutung zukommt, wird eine landwirtschaftliche Arbeitsmaschine, insbesondere eine selbstfahrende Erntemaschine oder ein Traktor, zur Durchführung des vorschlagsgemäßen Verfahrens als solches beansprucht. Auf alle Ausführungen zu dem vorschlagsgemäßen Verfahren, die geeignet sind, die Arbeitsmaschine zu erläutern, darf verwiesen werden.

Bevorzugt kann der Laserscanner als ein Solid-State LiDAR, ein Geiger-mode Lidar, ein Scanning LiDAR oder ein Single Photon LiDAR ausgeführt sein. Diese LiDAR-Sensoren zeichnen sich durch eine hohe Auflösung aus, was die Eindeutigkeit der Zuordnung der zeitlichen Signalform der Echopulse, beispielsweise mittels klassischer statischer oder adaptiver Schwellwertverfahren oder künstlicher neuronaler Netzwerke verbessert.

Die vorliegende Erfindung wird nachstehend anhand eines in den Zeichnungen dargestellten Ausführungsbeispieles näher erläutert.

Es zeigen:
- Fig. 1: eine Arbeitsmaschine zur Durchführung eines vorschlagsgemäßen Verfahrens mit einer Sensoranordnung während des Aberntens eines Feldbestands a) in einer Seitenansicht und b) in einer Draufsicht,
- Fig. 2: den Feldbestand gemäß Fig. 1 in einer Ansicht entlang der Fahrtrichtung der Arbeitsmaschine;
- Fig. 3: a) einen Sendepuls der Sensoranordnung gemäß Fig. 1 und b) der dem Sendepuls zugeordnete, resultierende Echopuls einer Pflanze;
- Fig. 4: a) zwei getrennte Teil-Echopulse und b) zwei überlagerte Teil-Echopulse;
- Fig. 5: a) exemplarisch einen Querschnitt von Höhenwerten eines Feldbestandes eines Maisfeldes und b) exemplarisch eine Echopulsform einer Feldbestandsreflexion von Maispflanzen und einer Bodenreflexion eines Bodens als jeweilige Reflexionsfläche; und
- Fig. 6: exemplarisch einen Querschnitt von Höhenwerten eines Feldbestandes eines Rapsfeldes und b) exemplarisch eine Echopulsform einer Feldbestandsreflexion von Rapspflanzen und einer Bodenreflexion.

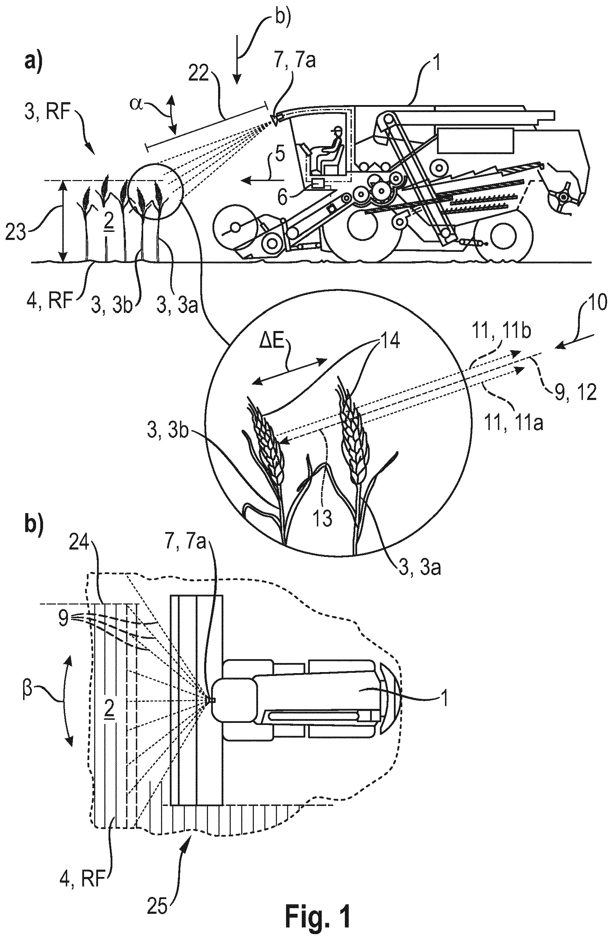

Die in Fig. 1 dargestellte, vorschlagsgemäße Arbeitsmaschine 1, die als selbstfahrende Erntemaschine ausgeführt ist, dient dem Bearbeiten einer landwirtschaftlich genutzten Fläche 25, hier dem Abernten eines Feldbestands 2 auf der Fläche 25, der aus einer Mehrzahl von Pflanzen 3 besteht. Die Pflanzen 3 des Feldbestands 2 befinden sich auf einem Feldboden 4, wie ebenfalls der Darstellung gemäß Fig. 1 zu entnehmen ist. Die Arbeitsmaschine 1 kann auch als Traktor mit daran angeordnetem oder gezogenem Anbaugerät ausgeführt sein.

Während des Erntebetriebs befindet sich der Feldbestand 2 in Fahrtrichtung 5 der Arbeitsmaschine 1 gesehen vor der Arbeitsmaschine 1. Von der Arbeitsmaschine 1 aus gesehen existieren die vordersten Pflanzen 3a und die bestandsinneren Pflanzen 3b.

Die Arbeitsmaschine 1 weist eine Steuerungseinheit 6 und eine Sensoranordnung 7 auf, wobei mittels der Sensoranordnung 7 periodisch Sendepulse 8 aus elektromagnetischen Sendestrahlen in mindestens einer Senderichtung 10 auf den Feldbestand 2 ausgesendet werden. Die Sendepulse 8 werden am Feldbestand 2 respektive den Pflanzen 3 sowie vom tieferliegenden Boden 4 reflektiert und als Echopulse 11 von der Sensoranordnung 7 empfangen. Die Pflanzen 3 und der Boden 4 bilden Reflexionsflächen RF.

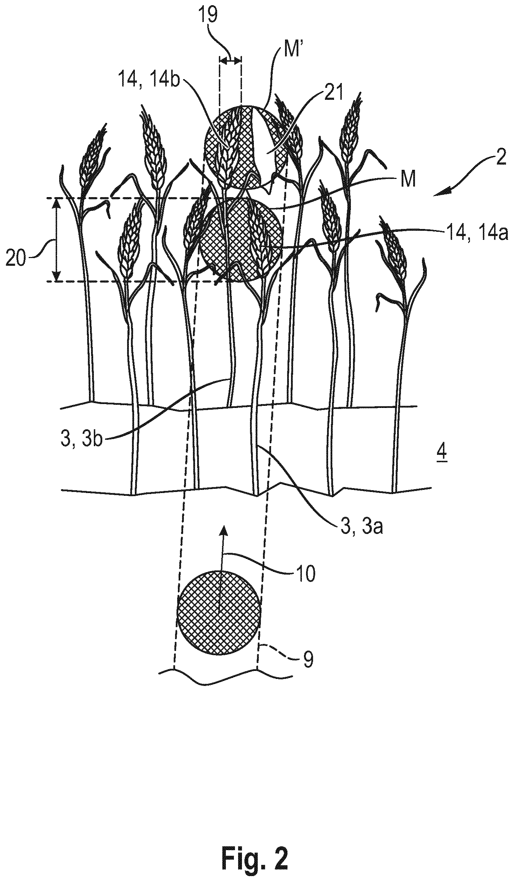

Eine Zusammenschau der Fig. 1 und Fig. 2 zeigt, dass für zumindest einen Teil der Sendepulse 8 unterschiedliche Teilstrahlen 12, 13 von in der jeweiligen Senderichtung 10 hintereinanderliegenden Pflanzen 3a, 3b des Feldbestands 2 zueinander zeitversetzt reflektiert werden. Der Grund hierfür besteht darin, dass der Teilstrahl 13 in Fig. 1a) verglichen mit dem Teilstrahl 12 einen zusätzlichen Weg, nämlich das Zweifache des Weges ΔE, durchlaufen muss. Der Zeitversatz ergibt sich entsprechend aus der Division des zusätzlichen Weges durch die Ausbreitungsgeschwindigkeit des Sendestrahls 9.

Fig. 2 zeigt, dass dem Sendestrahl 9 an der Pflanze 3a ein Messfleck M zugeordnet ist, der durch den Strahlquerschnitt des Sendestrahls 9 definiert ist. Die Pflanzen 3 des Feldbestands 2 sind hier und vorzugsweise mit Ähren 14 ausgestattet, wobei die Ähre 14a der vorderen Pflanze 3a die Reflexion des ersten Teilstrahls 12 bewirkt, während die Ähre 14b der hinteren Pflanze 3b die Reflexion eines zweiten Teilstrahls 13 bewirkt.

Bei der Darstellung des Sendestrahls 9 sowie der Teilstrahlen 12, 13 in der Zeichnung handelt es sich um einen idealisierten Zustand. In einer realen Umgebung ergeben sich meist eine Vielzahl von Teilstrahlen 12, 13 aus ein und demselben Sendestrahl 9, auf die das vorschlagsgemäße Grundprinzip jeweils analog anwendbar ist. Insoweit gelten alle Ausführungen zu den Teilstrahlen 12, 13 für alle anderen, eventuell auftretenden Teilstrahlen entsprechend.

Fig. 2 zeigt, dass der Strahlquerschnitt des Sendestrahls 9 eine gewisse Mindesterstreckung aufweisen muss, um die vorschlagsgemäße Mehrfachreflexion des Sendestrahls 9 zu ermöglichen. Hier und vorzugsweise ist es so, dass der Sendestrahl 9 an den bezogen auf die jeweilige Senderichtung vordersten Pflanzen 3a einen rundlichen Strahlquerschnitt ausbildet.

Bei Pflanzen 3 mit länglichen Ähren 14 ist der Messfleck vorzugsweise so ausgelegt, dass der Sendestrahl 9 an der betreffenden Ähre 14 vorbeistrahlen kann. Im Einzelnen ist es vorzugsweise so, dass die Pflanzen 3 längliche Ähren 14 mit einer mittleren Breitenerstreckung 19 ausbilden, wobei dem Sendestrahl 9 an den Ähren 14 der bezogen auf die jeweilige Senderichtung 10 vordersten Pflanzen 3a auf Grund seines Strahlquerschnitts ein Messfleck M zugeordnet ist, dessen Durchmesser 20 zumindest in einer Richtung größer, insbesondere um das mindestens zweifache größer, als die Breitenerstreckung 19 der Ähren 14 ist. Dieser Zusammenhang ist in Fig. 2 schematisch angedeutet. Fig. 2 zeigt weiter, dass der Messfleck M' im Bereich der bestandsinneren Pflanze 3b einen ausgenommenen Bereich 21 ausbildet, der sich aus der Reflexion des Teilstrahls 12, also durch die resultierende Abstrahlung, ergibt.

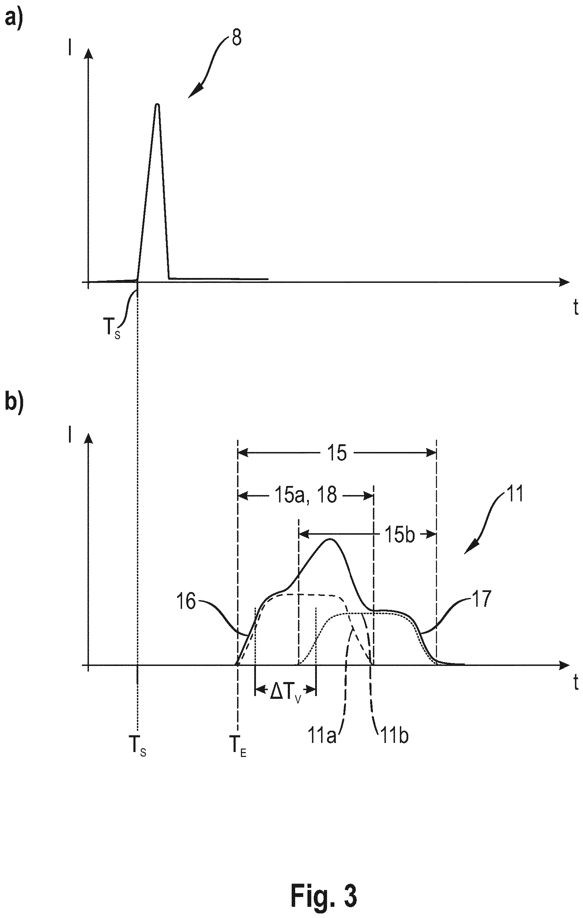

Aus der zeitversetzten Reflexion der Teilstrahlen 12, 13 ergibt sich, dass sich der jeweils resultierende Echopuls 11 aus entsprechend zeitversetzten Teil-Echopulsen 11a, 11b zusammensetzt, wie der Darstellung gemäß Fig. 3 zu entnehmen ist. Dabei zeigt Fig. 3a) zunächst den Sendepuls 8, der von der Sensoranordnung 7 in einer Senderichtung 11 auf den Feldbestand 2 ausgesendet wird. In Fig. 3a) ist der Sendepuls 8 durch seine Lichtleistung I über der Zeit t dargestellt.

Die Darstellung in Fig. 3b) zeigt einen dem Sendepuls 8 zugeordneten, resultierenden Echopuls 11 einer der Pflanzen 3. Eine entsprechende Darstellung des resultierenden Echopulses 11 findet sich in Fig. 3b). Hier zeigt sich, dass sich der jeweils resultierende Echopuls 11 aus entsprechend zeitversetzten Teil-Echopulsen 11a, 11b zusammensetzt. Bei dem dargestellten Ausführungsbeispiel heißt dies, dass sich der resultierende Echopuls 11 aus einer Addition der beiden Teil-Echopulse 11a, 11b ergibt. Der Zeitversatz ΔT_{V} entspricht der oben genannten Zeit, die der Sendestrahl 9 für das zweifache Durchlaufen der Strecke ΔE benötigt. Aus dem in Fig. 3b) gezeigten Verlauf ergibt sich, dass die beiden Teil-Echoimpulse 11a, 11b im Zeitbereich ineinander übergehen. Je nach Struktur des Feldbestands 3 kann es aber auch sein, dass die Teil-Echoimpulse 11a, 11b im Zeitbereich voneinander separiert sind.

Eine Zusammenschau der Fig. 1, Fig. 2 und Fig. 3 ergibt, dass die Strecke ΔE, die vorliegend auch als "Eindringtiefe" bezeichnet wird, Aufschluss über die Bestandsdichte geben kann. Interessant dabei ist die Tatsache, dass sich die Eindringtiefe ΔE aus dem Zeitversatz ΔT_{V} ableiten lässt. Mittels der Steuerungsanordnung 6 wird basierend auf einem zeitlichen Zusammenhang innerhalb des resultierenden Echopulses 11 ein Wert für die Bestandsdichte ermittelt wird. Bei dem obigen zeitlichen Zusammenhang handelt es sich um den oben angesprochenen Zeitversatz ΔT_{V} zwischen zwei Teil-Echopulsen 11a, 11b, hier zwischen dem ersten Teil-Echopuls 11a und dem letzten Teil-Echopuls 11b, die einem Sendepuls 8 zugeordnet sind.

Fig. 3b) zeigt, dass der Zeitversatz ΔT_{V} aus dem resultierenden Echopuls 11 gewissermaßen abgeleitet werden kann. Vorzugsweise ist es so, dass der Zeitversatz ΔT_{V} aus einer Pulsweite 15 des resultierenden Echopulses 11 ermittelt wird, wobei die Pulsweite 15 durch den zeitlichen Abstand zwischen der ersten ansteigenden Pulsflanke 16 und der letzten abfallenden Pulsflanke 17 des resultierenden Echopulses 11 definiert ist.

Weiterhin ist es vorgesehen, dass der Zeitversatz ΔT_{V} ermittelt wird, indem von der Pulsweite 15 eine Normierungsweite 18 subtrahiert wird, wobei die Normierungsweite 18 vorzugsweise definiert ist durch eine Pulsweite 15a des resultierenden Echopulses 11a, die sich bei einer unterstellten Einfachreflexion des Sendestrahls 9 an einer Pflanze 3a des Feldbestands 2 ergeben würde. Bei dem dargestellten Ausführungsbeispiel handelt es sich bei der Normierungsweite 18 also um die Pulsweite 15a des ersten Teil-Echopulses 11a. Dabei wird der Einfachheit halber unterstellt, dass die Pulsweiten 15a, 15b der beiden Teil-Echopulse 11a, 11b zueinander identisch sind.

Wie oben angesprochen, lässt sich der Wert für die Bestandsdichte grundsätzlich aus der Eindringtiefe ΔE ermitteln. Vorzugsweise ist es vorgesehen, dass der Wert für die Bestandsdichte ermittelt wird, indem der Kehrwert der Eindringtiefe ΔE des Sendestrahls 9 in den Feldbestand 2 gebildet wird und dass die Eindringtiefe ΔE aus dem Produkt des Zeitversatzes ΔT_{V} mit der Ausbreitungsgeschwindigkeit und ggf. mit einem Normierungsfaktor ermittelt wird. Dieser Kehrwert ist dann noch mit einem Proportionalitätsfaktor zu multiplizieren, um je nach Definition der Bestandsdichte zu dem jeweils gewünschten Wert für die Bestandsdichte zu gelangen.

Für die Auslegung der Sensoranordnung 7 sind verschiedene vorteilhafte Varianten denkbar. Hier und vorzugsweise ist es so, dass die elektromagnetischen Strahlen optische Strahlen, insbesondere Laserstrahlen, sind, deren Senderichtung 10 mittels der Steuerungseinheit 6 einstellbar ist. In besonders bevorzugter Ausgestaltung handelt es sich bei der Sensoranordnung 7 um einen Laserscanner 7a, der den Feldbestand 2 respektive die Fläche 25 in horizontal ausgerichteten Zeilen abscannt. Hierfür lässt sich der Neigungswinkel α des Sendestrahls 9 um die Horizontale und der Scanwinkel β um die Vertikale mittels der Steuerungsanordnung 6 einstellen.

Vorzugsweise ist die Sensoranordnung 7 als optischer Abstandssensor ausgestaltet, wobei mittels der Sensoranordnung 7 aus dem zeitlichen Abstand des Sendezeitpunkts Ts eines Sendepulses 8 zu dem Empfangszeitpunkt T_{E} des zugeordneten Echopulses 11 ein Abstandswert 22 zwischen der Sensoranordnung 7 und der jeweils reflektierenden Pflanze 3a ermittelt wird. Wie weiter oben angesprochen, handelt es sich bei der Sensoranordnung 7 vorzugsweise um eine Time-of-Flight-Sensoranordnung.

Bei der als Laserscanner 7a ausgeführten Sensoranordnung 7 ist es vorzugsweise so, dass die Senderichtung 10 der Sensoranordnung 7 mittels der Steuerungseinheit 6 fortlaufend in horizontaler Richtung und/oder in vertikaler Richtung modifiziert wird. In besonders bevorzugter Ausgestaltung ist es vorgesehen, dass mittels der Steuerungseinheit 6 aus den Abstandswerten und/oder den Werten für die Bestandsdichte eine Bestandshöhe 23 ermittelt wird. Im Falle des oben angesprochenen Laserscanners 7a ist dabei ein zeilenweises Abtasten des Feldbestands 2 vorgesehen, wobei der Neigungswinkel α zunehmend flacher gewählt wird. Beim Erreichen der oberen Kammlinie des Feldbestands 2 ändern sich nicht nur die oben angesprochenen Abstandswerte, sondern auch die Werte für die Bestandsdichte sprunghaft, woraus sich die Lage der Kammlinie und damit die Bestandshöhe 23 automatisiert erfassen lässt.

Alternativ oder zusätzlich kann es vorgesehen sein, dass mittels der Steuerungseinheit 6 aus den Abstandswerten 22 und/oder den Werten für die Bestandsdichte die Lage einer seitlichen Bestandskante 24 ermittelt wird. Auch dies lässt sich durch die automatisierte Erfassung einer sprunghaften Änderung in den betreffenden Werten bewerkstelligen.

Alternativ oder zusätzlich ist es weiter vorgesehen, dass mittels der Steuerungseinheit 6 aus den Abstandswerten und/oder den Werten für die Bestandsdichte die Lage eines Hindernisses ermittelt wird. Auch diese Ermittlung lässt sich auf die automatisierte Erfassung einer sprunghaften Änderung der betreffenden Werte zurückführen.

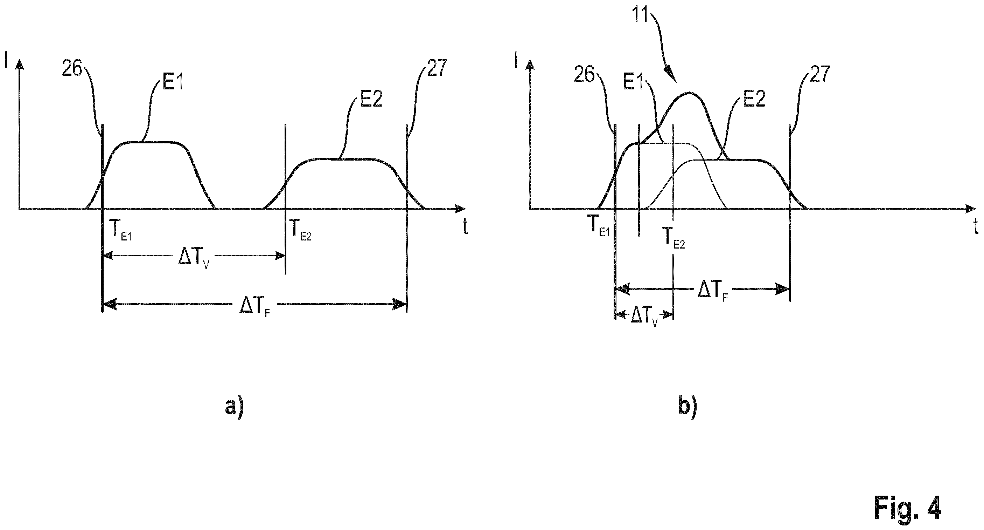

Wie weiter oben bereits ausgeführt bildet, neben den Pflanzen 3 des Feldbestands 2, der Boden 4 auf dem sich der Feldbestand 2 befindet, eine Reflexionsfläche RF für den jeweiligen Sendestrahl 9. Die verallgemeinerte Darstellung in Fig. 4 a) zeigt zwei getrennte Teil-Echopulse E1, E2 und Fig. 4 b) zeigt zwei überlagerte Teil-Echopulse E1, E2. Der Teil-Echopuls E1 resultiert aus der Reflexion des Sendestrahls 9 an einer der Pflanzen 3 und der Teil-Echopuls E2 resultiert aus der Reflexion des Sendestrahls 9 am Boden 4. Der resultierende Echopuls 11 setzt sich aus den Teil-Echopulsen E1 und E2 zusammen.

In den Fig. 4 a) und 4 b) ist mit 26 eine erste ansteigende Flanke des reflektierten Teil-Echopulses E1 und mit 27 eine letzte abfallende Flanke des reflektierten Teil- Echopulses E2 bezeichnet. Die erste ansteigende Flanke 26 des Teil- Echopulses E1 markiert dabei das Auftreffen des Sendestrahls 9 auf die Pflanzen 3 des Feldbestands 2 und die letzte abfallende Flanke 27 des Teil- Echopulses E2 markiert das zugehörige Bodenniveau.

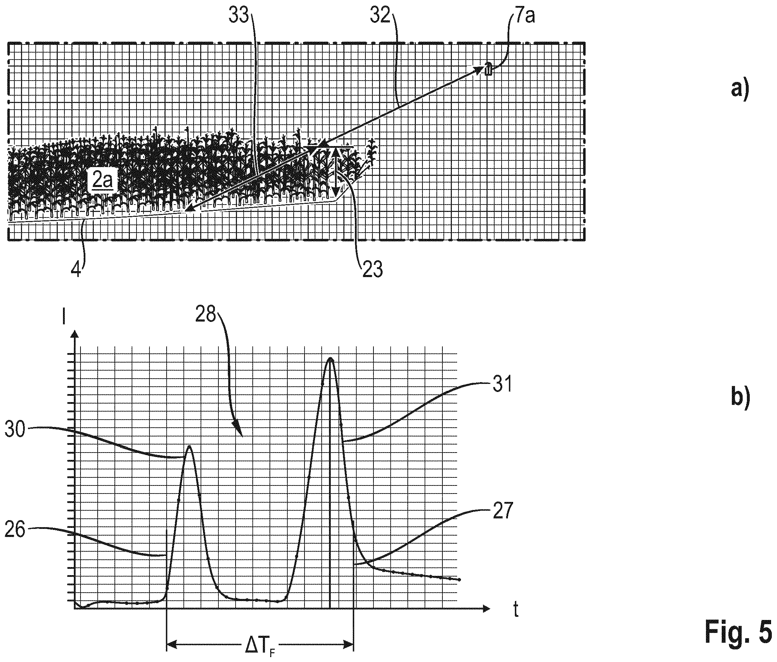

Anhand eines Zeitversatzes ΔT_{F} zwischen der ersten steigenden Flanke 26 und der letzten fallenden Flanke 27 eines oder mehrerer ausgesandten elektromagnetischen Sendepulse 8 für eine Akkumulation von Messwerten in einem begrenzten Segment innerhalb eines Pflanzenbestandes 2 und sensorspezifischen Kennwerten können so Aussagen über die Ausdehnung des Pflanzenbestandes 2 bzw. der Bestandshöhe 23 und die Lage des Bodenniveaus getroffen werden. Dies wird nachstehend anhand der Fig. 5 a), 5 b) und 6 a), 6 b) weiter veranschaulicht.

In Fig. 5 a) ist exemplarisch ein Querschnitt von Höhenwerten eines Feldbestandes 2a eines Maisfeldes und in Fig. 5 b) exemplarisch eine Echopulsform 28 einer Feldbestandsreflexion von Maispflanzen und einer Bodenreflexion des Bodens 4 als jeweilige Reflexionsfläche RF dargestellt. In Fig. 5 a) ist lediglich die Position des an der Arbeitsmaschine 1 angeordneten Laserscanners 7a angedeutet sowie nur ein ausgesandter Sendestrahl 9 exemplarisch dargestellt, der zunächst auf den aus den Maispflanzen bestehenden Feldbestand 2a und dann auf den Boden 4 trifft und jeweils zeitversetzt teilreflektiert wird.

Die im Fall von Maispflanzen als Feldbestand 2a resultierenden Echopulsverläufe 30, 31, wobei der Echopulsverlauf 30 der Feldbestandsreflexion der Maispflanzen und der Echopulsverlauf 31 der Bodenreflexion entspricht, sind beispielhaft in Fig. 5 b) dargestellt. Aufgrund des gegenüber anderen Fruchtarten geringeren Abstands der Kammlinie des Feldbestands 2a zum an der Arbeitsmaschine 1 angeordneten Laserscanner 7a werden zunächst die Teilechopulse E1 der Maispflanzen und, mit einem deutlichen zeitlichen Versatz aufgrund der Bestandshöhe 23, anschließend die Teilechopulse E2 der Bodenreflexion detektiert.

Eine zwischen dem Laserscanner 7a und der Kammlinie des Feldbestands 2a bestehende erste Distanz 32 ist die von dem Sendepuls 8 und dem reflektierten Teilechopuls E1 zurückzulegende Wegstrecke und eine zwischen der Kammlinie und dem Feldboden 4 bestehende zweite Distanz 33 ist die zusätzliche Wegstrecke, welche der Sendepuls 8 und der vom Boden 4 reflektierte Teilechopuls E2 darüberhinausgehend zurückzulegen haben. Der daraus resultierende zeitliche Abstand der Teilechopulse E1, E2 ermöglicht eine klare Unterscheidung zwischen dem Feldbestand 2a und dem Boden 4 einerseits und aufgrund der Pulsform 28 eine Identifikation der Fruchtart der Pflanzen innerhalb des Feldbestandes 2a, hier der Maispflanzen, anhand zumindest einer für die Fruchtart Mais spezifischen Referenzkurve. In Fig. 5b) sind die erste steigende Flanke 26 und die letzte fallende Flanke 27 exemplarisch kenntlich gemacht, aus deren Zeitversatz ΔT_{F} Aussagen über die Ausdehnung des Pflanzenbestandes 2a bzw. der Bestandshöhe 23 und die Lage des Bodenniveaus getroffen werden.

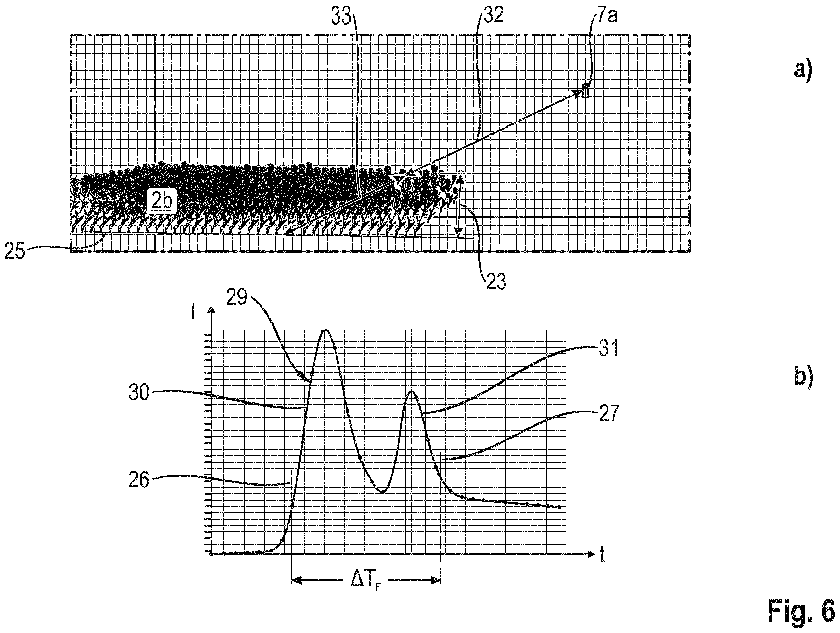

In Fig. 6 a) ist exemplarisch ein Querschnitt von Höhenwerten eines Feldbestandes 2b eines Rapsfeldes und in Fig. 6 b) exemplarisch eine Echopulsform 29 einer Feldbestandsreflexion von Rapspflanzen und einer Bodenreflexion dargestellt. Wie in Fig. 5 a) auch, ist in Fig. 6 a) lediglich die Position des an der Arbeitsmaschine 1 angeordneten Laserscanners 7a angedeutet sowie nur ein ausgesandter Sendestrahl 9 exemplarisch dargestellt, der zunächst auf den aus den Rapspflanzen bestehenden Feldbestand 2b und dann auf den Boden 4 trifft und jeweils zeitversetzt teilreflektiert wird.

Der aus Rapspflanzen bestehende Feldbestand 2b weist eine geringere Bestandshöhe 23 als der aus Maispflanzen bestehende Feldbestand 2a auf, so dass der Unterschied zwischen der ersten Distanz 32 zur zweiten Distanz 33 und den damit verbundenen Signallaufzeiten in Relation zum aus Maispflanzen bestehenden Feldbestand 2a erheblich geringer ist. Entsprechend stellt sich bei dem aus Rapspflanzen bestehenden Feldbestand 2b gegenüber dem aus Maispflanzen bestehenden Feldbestand 2a eine abweichende Echopulsform 29 ein. Auch in Fig. 6b) sind die erste steigende Flanke 26 und die letzte fallende Flanke 27 exemplarisch kenntlich gemacht, aus deren Zeitversatz ΔT_{F} Aussagen über die Ausdehnung des Pflanzenbestandes 2b bzw. der Bestandshöhe 23 und die Lage des Bodenniveaus getroffen werden.

Es können unterschiedliche Methoden der digitalen Bildverarbeitung zur Auswertung projizierter Sensordaten des Laserscanners 7a zur Anwendung kommen. Entsprechend kann die Steuerungseinheit 6 auch zur Bildverarbeitung und Bildauswertung eingerichtet sein.

Der Laserscanner 7a kann als ein Solid-State LiDAR, ein Geiger-mode Lidar, ein Scanning LiDAR oder ein Single Photon LiDAR ausgeführt sein. Zur Auswertung und Klassifizierung werden unterschiedliche in den LiDAR-Sensor-Signalen enthaltene Informationen herangezogen. So kann für die Klassifizierung von geometrischen Umfeld- und Objekteigenschaften ein von dem Laserscanner 7a erzeugte Punktwolke ausgewertet werden. Die Auswertung der Amplitude bzw. Intensität des resultierenden Echopulses 30, 31 kann eine Bestimmung der Oberflächenfarbe und/oder einer Oberflächenrauheit der Reflexionsflächen RF ermöglichen. Das Detektieren von Oberflächen- und/oder Objekt- und/oder Umfeldstrukturen kann durch das Umgebungslicht (ambient light) beeinflusst werden. Somit kann bei der Auswertung der LiDAR-Sensor-Signale der Einfluss des Umgebungslichts (ambient light) berücksichtigt werden, um Verfälschungen beim Klassifizieren der Oberflächen- und/oder Objekt- und/oder Umfeldstrukturen der Reflexionsflächen RF zu vermeiden. Die Auswertung der zeitlichen Signalform bzw. Wellenform der Pulsformen 28 kann zur Bestimmung der Oberflächen- und/oder inneren Objektstruktur verwendet werden. Die Auswertung der Wellenlänge des ausgesendeten Sendepulses 8 kann zur Bestimmung einer Oberflächenfarbe und/oder einer Oberflächenrauheit und/oder einer Zusammensetzung der Reflexionsflächen RF verwendet werden. Die vorstehend aufgeführten in den LiDAR-Sensor-Signalen enthaltenen unterschiedlichen Informationen können teilweise mit dem gleichen Ziel, bspw. dem Bestimmen der Oberflächenstruktur, Oberflächenfarbe oder Oberflächenrauheit, ausgewertet werden.

Gemäß einer bevorzugten Weiterbildung kann zumindest eine zusätzliche, von einem Laserscanner 7a abweichende, optische Sensoranordnung zur Klassifikation der Reflexionsfläche RF als auch der Fruchtart und/oder des Fremdbewuchses verwendet werden. Eine Einbeziehung einer zusätzlichen optischen Sensoranordnung, die nicht als Laserscanner ausgeführt ist, kann zu einer Verbesserung des Analysevorgangs bei der Klassifikation beitragen. Beispielsweise kann eine Kamera als zusätzliche optische Sensoranordnung vorgesehen sein, welche Bilder im sichtbaren Spektralbereich generiert. Alternativ kann eine Kamera als zusätzliche optische Sensoranordnung vorgesehen sein, welche Bilder im Nahinfrarotbereich generiert. Durch das Einbeziehen von RGB-Kamerabildern oder Infrarotkamerabildern sowie zusätzlicher spezifischer Merkmale der Reflexionsfläche RF als auch des Pflanzenbestandes und/oder des Fremdbewuchses, wie Form, Farbe, Struktur und dergleichen, kann das Ergebnis der Klassifikation verbessert werden.

**Bezugszeichenliste**

| | | | |
|---|---|---|---|
| 1 | Arbeitsmaschine | 23 | Bestandshöhe |
| 2 | Feldbestand | 24 | Bestandskante |
| 2a | Feldbestand Mais | 25 | Fläche |
| 2b | Feldbestand Raps | 26 | Erste ansteigende Flanke |
| 3 | Pflanze | 27 | Letzte abfallende Flanke |
| 3a | Vordere Pflanze | 28 | Echopulsform |
| 3b | Hintere Pflanze | 29 | Echopulsform |
| 4 | Feldboden | 30 | Echopulsverlauf |
| 5 | Fahrtrichtung | 31 | Echopulsverlauf |
| 6 | Steuerungseinheit | 32 | Erste Distanz |
| 7 | Sensoranordnung | 33 | Zweite Distanz |
| 7a | Laserscanner | M | Messfleck vorne |
| 8 | Sendepuls | M' | Messfleck hinten |
| 9 | Sendestrahl | | |
| 10 | Senderichtung | | |
| 11 | Echopuls | | |
| 11a | Teilechopuls | | |
| 11b | Teilechopuls | | |
| 12 | Teilstrahl | | |
| 13 | Teilstrahl | | |
| 14 | Ähre | | |
| 14a | Vordere Ähre | | |
| 14b | Hintere Ähre | | |
| 15 | Pulsweite | | |
| 15a | Pulsweite | | |
| 15b | Pulsweite | | |
| 16 | Pulsflanke | | |
| 17 | Letzte abfallende Pulsflanke | | |
| 18 | Normierungsweite | | |
| 19 | Breitenerstreckung | | |
| 20 | Durchmesser | | |
| 21 | Ausgenommener Bereich | | |
| 22 | Abstandswert | | |

## Patentansprüche

1. Verfahren zur Detektion des Bodenniveaus auf einer von einer landwirtschaftlichen Arbeitsmaschine (1) zu bearbeitenden Fläche (25), wobei die Arbeitsmaschine (1) eine Sensoranordnung (7) umfasst, durch die periodisch Sendepulse (8) aus elektromagnetischen Sendestrahlen (9) in mindestens einer Senderichtung (10) auf die zu bearbeitende Fläche (25) ausgesendet werden, wobei die Sendepulse (8) von einem Feldbestand (2, 2a, 2b) und Boden (4) als Reflektionsflächen (RF) reflektiert und als Echopulse (11) von der Sensoranordnung (7) empfangen und an eine Steuerungseinheit (6) der Arbeitsmaschine (1) zur Auswertung übertragen werden, wobei für zumindest einen Teil der von der als Laserscanner (33) ausgeführten Sensoranordnung (7) ausgesendeten Sendepulse (8) unterschiedliche Teilstrahlen (12, 13) ein und desselben Sendestrahls (9) von in der jeweiligen Senderichtung (10) befindlichen Reflektionsflächen (RF) zueinander zeitversetzt reflektiert werden, so dass sich der jeweils resultierende Echopuls (11) aus entsprechend zeitversetzten Teil-Echopulsen (11 a, 11b, E1, E2) zusammensetzt, wobei mittels der Steuerungseinheit (6) basierend auf einer Pulsweite (ΔT_{F}) innerhalb des resultierenden Echopulses (11) und/oder einer Pulsform (28, 29) des resultierenden Echopulses (11) sowie einer laufzeitbasierten Distanzbestimmung eines Distanzwertes (32, 33) zur jeweiligen Reflektionsfläche (RF) das Bodenniveau und/oder eine Bestandshöhe (23) ermittelt wird.

2. Verfahren nach Anspruch 1, **dadurch gekennzeichnet, dass** durch das Verarbeiten und Auswerten der zeitlichen Signalform der Echopulse, die von der als Laserscanner (7a) ausgeführten Sensoranordnung (7) bereitgestellt werden, zwischen Pflanzen unterschiedlicher Fruchtarten unterschieden wird.

3. Verfahren nach Anspruch 2, **dadurch gekennzeichnet, dass** eine Unterscheidung zwischen verschiedenen Fruchtarten des Feldbestands (2, 2a, 2b) anhand eines Streuungsmaßes der Reflexionshöhe und/ oder der Signatur der Pulsform (28, 29) durch einen Vergleich mit Referenzkurven durchgeführt wird.

4. Verfahren nach Anspruch 3, **dadurch gekennzeichnet, dass** als Streuungsmaß eine Varianz, eine Standardabweichung oder ein Quantil verwendet werden.

5. Verfahren nach Anspruch 3 oder 4, **dadurch gekennzeichnet, dass** die Unterscheidung zwischen verschiedenen Fruchtarten des Feldbestands (2, 2a, 2b) anhand der Pulsweite (15) bezogen auf einen vorgegebenen Schwellwert für eine Akkumulation von Messwerten in einem räumlich begrenzten Segment innerhalb des Feldbestands (2, 2a, 2b) durchgeführt wird.

6. Verfahren nach einem der vorangehenden Ansprüche, **dadurch gekennzeichnet, dass** anhand einer ersten ansteigenden Flanke (26) des jeweiligen resultierenden Echopulses (11) das Auftreffen auf den Feldbestand (2, 2a, 2b) und anhand einer letzten fallenden Flanke (27) des resultierenden Echopulses (11) das Auftreffen auf den Boden (4) bestimmt werden.

7. Verfahren nach Anspruch 6, **dadurch gekennzeichnet, dass** anhand eines Zeitversatzes (ΔTᵥ) zwischen der ersten ansteigenden Flanke (26) und der letzten fallenden Flanke (27) des jeweiligen resultierenden Echopulses (11) für eine Akkumulation von Messwerten in einem Segment innerhalb des Feldbestands (2, 2a, 2b) die Bestandshöhe (23) und die Lage des Bodenniveaus bestimmt werden.

8. Verfahren nach einem der der vorangehenden Ansprüche, **dadurch gekennzeichnet, dass** basierend auf der Detektion zumindest des Bodenniveaus zumindest eine Handlungsanweisung durch die Steuerungseinheit (6) generiert wird, um den Betrieb der Arbeitsmaschine (1) zu beeinflussen.

9. Verfahren nach Anspruch 8, **dadurch gekennzeichnet, dass** als zumindest eine Handlungsanweisung eine Vorgabe und/oder eine Auswahl von initialen Betriebsparametern für zumindest ein Arbeitsaggregat der landwirtschaftlichen Arbeitsmaschine (1) durchgeführt wird.

10. Verfahren nach einem der vorangehenden Ansprüche, **dadurch gekennzeichnet, dass** die Reflexionsintensität des jeweiligen Echopulses (11), die Wellenlänge und/oder Umgebungslichtverhältnisse durch den Laserscanner (7a) bestimmt werden.

11. Verfahren nach einem der vorangehenden Ansprüche, **dadurch gekennzeichnet, dass** zumindest eine zusätzliche, von einem Laserscanner (7a) abweichende, optische Sensoranordnung zur Klassifikation der Fruchtart und/oder eines Fremdbewuchses verwendet wird.

12. Verfahren nach einem der vorangehenden Ansprüche, **dadurch gekennzeichnet, dass** zur Analyse des jeweiligen resultierenden Echopulses (11) statistische oder adaptive Schwellwertverfahren oder nicht-analytische Verfahren verwendet werden.

13. Landwirtschaftliche Arbeitsmaschine (1), insbesondere selbstfahrende Erntemaschine oder Traktor, welche mit den technischen Mitteln zur Durchführung eines Verfahrens nach einem der vorangehenden Ansprüche ausgestattet ist.

14. Landwirtschaftliche Arbeitsmaschine (1) nach Anspruch 13, **dadurch gekennzeichnet, dass** der Laserscanner (7a) als ein Solid-State LiDAR, ein Geiger-mode Lidar, ein Scanning LiDAR oder ein Single Photon LiDAR ausgeführt ist.

## Claims

1. A method for detecting the ground level on an area (25) to be processed by an agricultural working machine (1), wherein the working machine (1) comprises a sensor system (7) by means of which periodic transmitted pulses (8) produced from electromagnetic transmitting beams (9) are emitted in at least one transmitting direction (10) onto the area (25) to be processed, wherein the transmitted pulses (8) are reflected from a field crop (2, 2a, 2b) and ground (4) as reflecting surfaces (RF) and are received by the sensor system (7) as echo pulses (11) and transferred to a control unit (6) of the working machine (1) for analysis, wherein, for at least a portion of the transmitted pulses (8) emitted by the sensor system (7) which is configured as a laser scanner (33), different partial beams (12, 13) of one and the same transmitting beam (9) are reflected with a time delay with respect to one another from reflecting surfaces (RF) located in the respective transmitting direction (10), so that the respective resultant echo pulse (11) is composed of correspondingly time-delayed partial echo pulses (11a, 11b, E1, E2), wherein the ground level and/or a crop height (23) is determined by means of the control unit (6) on the basis of a pulse width (ΔT_{F}) within the resultant echo pulse (11) and/or on the basis of a pulse form (28, 29) of the resultant echo pulse (11) as well as a time of flight-based distance determination of a distance value (32, 33) to the respective reflecting surface (RF).

2. The method according to claim 1, **characterized in that** plants of different crop types are distinguished by processing and analysing the signal form with respect to time of the echo pulses which are provided by the sensor system (7) which is configured as a laser scanner (7a).

3. The method according to claim 2, **characterized in that** a distinction between different crop types of the field crop (2, 2a, 2b) is made with the aid of a measure of the dispersion of the reflection height and/or of the signature of the pulse form (28, 29) by means of a comparison with reference curves.

4. The method according to claim 3, **characterized in that** a variance, a standard deviation or a quantile is used as the measure of the dispersion.

5. The method according to claim 3 or claim 4, **characterized in that** the distinction between different crop types of the field crop (2, 2a, 2b) is made with the aid of the pulse width (15) related to a predetermined threshold value for an accumulation of measured values in a spatially delimited segment within the field crop (2, 2a, 2b).

6. The method according to one of the preceding claims, **characterized in that** impingement on the field crop (2, 2a, 2b) is determined with the aid of a first ascending flank (26) of the respective resultant echo pulse (11) and impingement on the ground (4) is determined with the aid of a last descending flank (27) of the resultant echo pulse (11).

7. The method according to claim 6, **characterized in that** the crop height (23) and the position of the ground level are determined with the aid of a time delay (ΔT_{V}) between the first ascending flank (26) and the last descending flank (27) of the respective resultant echo pulse (11) for an accumulation of measured values in a segment within the field crop (2, 2a, 2b).

8. The method according to one of the preceding claims, **characterized in that** at least one handling instruction for influencing the operation of the working machine (1) is generated by the control unit (6) on the basis of the detection of at least the ground level.

9. The method according to claim 8, **characterized in that** a specification and/or a selection of initial operating parameters for at least one working assembly of the agricultural working machine (1) is made as the at least one handling instruction.

10. The method according to one of the preceding claims, **characterized in that** the reflective intensity of the respective echo pulse (11), the wavelength and/or ambient lighting conditions are determined by the laser scanner (7a).

11. The method according to one of the preceding claims, **characterized in that** at least one additional optical sensor system which is different from a laser scanner (7a) is used for the classification of the crop type and/or of extraneous vegetation.

12. The method according to one of the preceding claims, **characterized in that** statistical or adaptive threshold value methods or non-analytical methods are used for the analysis of the respective resultant echo pulse (11).

13. An agricultural working machine (1), in particular a self-propelled harvesting machine or a tractor, which is equipped with the technical means for carrying out a method according to one of the preceding claims.

14. The agricultural working machine (1) according to claim 13, **characterized in that** the laser scanner (7a) is configured as a solid state lidar, a Geiger mode lidar, a scanning lidar or a single photon lidar.

## Revendications

1. Procédé de détection du niveau du sol sur une surface (25) devant être traitée par une machine de travail agricole (1), la machine de travail (1) comprenant un dispositif à capteur (7) qui émet de manière périodique des impulsions d'émission (8) à partir de faisceaux d'émission (9) électromagnétiques, dans au moins une direction d'émission (10), sur la surface (25) à traiter, les impulsions d'émission (8) étant réfléchies par une culture de champ (2, 2a, 2b) et un sol (4), en tant que surfaces de réflexion (RF), et étant reçues en tant qu'impulsions écho (11) par le dispositif à capteur (7) et transmises à une unité de commande (6) de la machine de travail (1), en vue de l'évaluation, sachant que des faisceaux partiels (12, 13) différents d'un même faisceau d'émission (9) sont réfléchis avec un décalage réciproque dans le temps par des surfaces de réflexion (RF) se situant dans la direction d'émission (10) respective, pour au moins une partie des impulsions d'émission (8) émises par le dispositif à capteur (7) réalisé sous forme de scanner au laser (33), de sorte que l'impulsion écho (11) résultante respective se compose d'impulsions écho partielles (11a, 11b, E1, E2) présentant un décalage correspondant dans le temps, l'unité de commande (6) permettant de déterminer le niveau du sol et/ou une hauteur de culture (23), sur la base d'une largeur d'impulsion (ΔT_{F}) à l'intérieur de l'impulsion écho (11) résultante et/ou d'une forme d'impulsion (28, 29) de l'impulsion écho (11) résultante, ainsi que d'une détermination de distance, fondée sur le temps de parcours, d'une valeur de distance (32, 33) par rapport à la surface de réflexion (RF) correspondante.

2. Procédé selon la revendication 1, **caractérisé en ce que** le traitement et l'évaluation de la forme de signal temporelle des impulsions écho fournies par le dispositif à capteur (7) réalisé comme scanner au laser (7a), permettent de distinguer entre des plantes de différentes cultures.

3. Procédé selon la revendication 2, **caractérisé en ce qu'**une distinction entre des types de cultures différents de la végétation du champ (2, 2a, 2b) est réalisée par une comparaison avec des courbes de référence, à l'aide d'un degré de dispersion de la hauteur de réflexion et/ou de la signature de la forme d'impulsion (28, 29).

4. Procédé selon la revendication 3, **caractérisé en ce que** l'on utilise comme degré de dispersion une variance, un écart standard ou un quantile.

5. Procédé selon la revendication 3 ou 4, **caractérisé en ce que** la distinction entre des types de cultures différents de la végétation du champ (2, 2a, 2b) est réalisée à l'aide de la largeur d'impulsion (15) rapportée à une valeur seuil prédéfinie, pour une accumulation de valeurs mesurées dans un segment délimité dans l'espace à l'intérieur de la végétation du champ (2, 2a, 2b).

6. Procédé selon une des revendications précédentes, **caractérisé en ce que** l'on détermine l'impact sur la végétation du champ (2, 2a, 2b) à l'aide d'un premier flanc ascendant (26) de l'impulsion écho (11) résultante respective, et l'impact sur le sol (4) à l'aide d'un dernier flanc descendant (27) de l'impulsion écho (11) résultante.

7. Procédé selon la revendication 6, **caractérisé en ce que** l'on détermine la hauteur de culture (23) et la position du niveau du sol à l'aide d'un décalage de temps (ΔT_{y}) entre le premier flanc ascendant (26) et le dernier flanc descendant (27) de l'impulsion écho (11) résultante respective, pour une accumulation de valeurs mesurées dans un segment à l'intérieur de la végétation du champ (2, 2a, 2b).

8. Procédé selon une des revendications précédentes, **caractérisé en ce que**, sur la base de la détection au moins du niveau du sol, au moins une instruction d'action est générée par l'unité de commande (6) pour influencer le fonctionnement de la machine de travail (1).

9. Procédé selon la revendication 8, **caractérisé en ce que** l'on exécute, en tant qu'instruction d'action, au nombre d'au moins une, une prédéfinition et/ou une sélection de paramètres de fonctionnement initiaux pour au moins un équipement de travail de la machine agricole (1).

10. Procédé selon une des revendications précédentes, **caractérisé en ce que** l'intensité de réflexion de l'impulsion écho (11) respective, la longueur d'onde et/ou les conditions lumineuses ambiantes sont déterminées par le scanner au laser (7a).

11. Procédé selon une des revendications précédentes, **caractérisé en ce que** l'on utilise au moins un dispositif à capteur optique supplémentaire, différent d'un scanner au laser (7a), pour la classification du type de culture et/ou d'une végétation étrangère.

12. Procédé selon une des revendications précédentes, **caractérisé en ce que** l'on utilise pour l'analyse de l'impulsion écho (11) résultante respective, des procédés à valeur seuil statistiques ou adaptatifs ou des procédés non analytiques.

13. Machine de travail agricole (1), notamment machine de récolte automotrice ou tracteur, qui est dotée des moyens techniques pour la mise en œuvre d'un procédé selon une des revendications précédentes.

14. Machine de travail agricole (1) selon la revendication 13, **caractérisée en ce que** le scanner au laser (7a) est réalisé comme LiDAR à l'état solide, comme Lidar à mode Geiger, comme LiDAR à balayage ou comme LiDAR à photon unique.
